(19) Europäisches Patentamt
European Patent Office
Office européen des brevets

(11) Publication number: **0 026 339**
**B1**

(12) **EUROPEAN PATENT SPECIFICATION**

(45) Date of publication of patent specification: **30.11.83**

(21) Application number: **80105167.3**

(22) Date of filing: **29.08.80**

(51) Int. Cl.³: **C 09 D 3/80**, C 08 F 2/46, C 08 F 220/36, C 08 F 220/20

(54) **Radiation curable coating composition and process for coating a substrate therewith.**

(30) Priority: **30.08.79 US 71356**
**27.09.79 US 79550**

(43) Date of publication of application:
**08.04.81 Bulletin 81/14**

(45) Publication of the grant of the patent:
**30.11.83 Bulletin 83/48**

(84) Designated Contracting States:
**CH DE FR GB IT LI**

(56) References cited:
**US - A - 3 644 466**
**US - A - 4 129 709**
**US - A - 4 178 303**

(73) Proprietor: **GAF CORPORATION**
**140 West 51st Street**
**New York New York 10020 (US)**

(72) Inventor: **Gruber, Bruce A.**
**2082 Sawbury Boulevard**
**Worthington Ohio 43085 (US)**
Inventor: **Lorenz, Donald H.**
**12 Radel Place**
**Basking Ridge New Jersey 07920 (US)**

(74) Representative: **Schmied-Kowarzik, Volker, Dr. et al,**
**Patentanwälte Dr. V. Schmied-Kowarzik Dipl.-Ing. G. Dannenberg Dr. P. Weinhold Dr. D. Gudel Dipl.-Ing. S. Schubert Siegfriedstrasse 8**
**D-8000 München 40 (DE)**

**EP 0 026 339 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

Radiation curable coating composition and process for coating a substrate therewith

This invention relates to radication curable coating compositions containing copolymerizable ultra-violet light absorber compounds, which can provide polymer materials with improved degradation to light.

Coating compositions which are curable under the influence of radiation in general and ultra-violet light as well as electron beam in particular are well known. Representative examples of prior coating compositions include those disclosed in U.S. Patents 3,782,961; 3,829,531; 3,850,770; 3,874,906; 3,864,133; 3,891,523; 3,895,171; 3,899,611; 3,907,574; 3,912,516; 3,932,356; and 3,989,609. Unfortunately, these coating compositions suffer from a number of disadvantages and do not have an in situ ultraviolet absorber in the composition. Many of these coating compositions have insufficient flexibility that causes them to crack when applied to flexible substrates such as those of polyvinyl chloride. Other compositions do not adhere sufficiently to the substrate with the undesirable result that they become dislodged or peel. Still other coating compositions require the use of solvents that must be evaporated during the curing process. The evaporation of such solvents consumes energy and creates atmospheric pollution problems. Other compositions produce coatings that yellow, do not weather well, and have insufficient scratch-resistance, stain-resistance, abrasion-resistance, and/or solvent-resistance.

The use of ultra-violet absorbers in plastics or coatings to enhance weather resistance is known. The absorbers absorb the radiation and dissipate the energy and thus protect the coating from structural degradation. Considerable economic saving is realized by incorporating the ultra-violet absorber on the surface of a plastic article rather than using the ultra-violet absorber in conventional bulk application. Conventional surface application, such as the use of a solvent or paint which is, moreover, undesirable in view of the pollution hazard and bulk handling procedures. Radiation curing has made possible production of coating films which are easier to handle, but heretofore ultra-violet absorbers have consumed the energy from the radiation source resulting in too high energy demands in curing or too slow curing rates. If a small amount of ultra-violet photoinitiator is used to facilitate curing, then addition of use levels of most ultra-violet stabilizers would prevent the curing from occurring.

Accordingly, it is an object of the present invention to provide an improved coating composition that is substantially free of one or more of the disadvantages of prior radiation curable coating compositions.

Yet another object is to provide a coating composition that will produce a coating that is weather-resistant, flexible, non-yellowing, scratch-resistant, stain-resistant, abrasion-resistant, and solvent-resistant.

Yet another object is to provide a coating composition that is free of volatile solvents.

Another object is to provide an improved process for coating substrates such as those of natural leather, synthetic leather, polyvinyl chloride, polyurethanes and polycarbonates.

Still another object is to provide a coating composition with a copolymerizable ultra-violet absorber which can be cured by radiation.

The above and other objects are accomplished according to the present invention by providing a coating composition comprising:

A. An oligomer of Formula I:

(I)

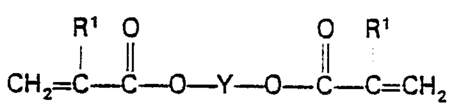

where:

$R^1$ is hydrogen or methyl;

Y is a divalent urethane residue; and,

B. A copolymerizable (2-Cyano-3,3-diphenylacryloxy) alkylene acrylic acid ester ultra-violet light absorber having the Formula IV:

(IV)

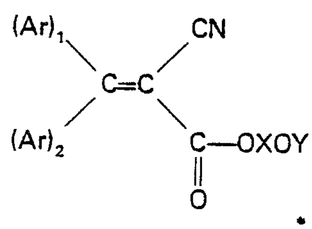

where:

$(Ar)_1$ and $(Ar)_2$ are independently selected from phenyl or phenyl substituted with alkyl, halogen,

alkoxy, carboxy, carbalkoxy, cyano, acetyl, benzoyl, phenyl, alkyl phenyl, phenoxy phenyl, alkyl substituted phenoxy, or alkoxy phenyl substituted phenyl and naphthyl;

X is alkylene, $C_2$—$C_{17}$, unsubstituted or substituted with halogen, cyano, alkyl $C_1$—$C_6$, alkoxy $C_1$—$C_6$, alkoxyalkyl up to $C_8$ or alkoxyalkyleneoxy up to $C_6$; and,

Y is a copolymerizable radical selected from acryloyl alkylacroyl up to $C_{12}$, acryloxyalkyl up to $C_{12}$, acryloxy-hydroxyalkyl up to $C_{12}$ and alkylacryloxyhydroxyalkyl up to $C_{12}$ or —RCR′=CHR″, where R is alkylene $C_1$—$C_{10}$, oxyalkylene $C_1$—$C_{10}$, alkyleneoxyalkylene up to $C_{10}$ or phenylene, unsubstituted or substituted with hydroxy, and,

R′ and R″ are independently hydrogen or alkyl $C_1$—$C_6$.

In the best mode of the invention, $(Ar)_1$ and $(Ar)_2$ are phenyl, X is —$C_2H_4$—, R is alkylene, —$CH_2$—, and R′ and R″ are both hydrogen.

Preferably the composition includes a vinyl monomer or monomers which are copolymerizable with the oligomers. Suitable vinyl monomers are N-vinyl-2-pyrrolidone and acrylic acid esters.

Oligomers of Formula I with an acrylic or methacrylic component are well known in the art. Oligomers of this type are shown in U.S. Patents 3,907,574; 3,874,906; 3,989,609; and 3,895,171. A preferred type of oligomer contains both an acrylic component and a urethane portion in the Y radical. Examples of these compounds are found in U.S. Patents 3,912,516, 3,891,523; 3,864,133 and 3,850,770.

Preferred novel types of acryl urethane are shown by Formulas II and III:

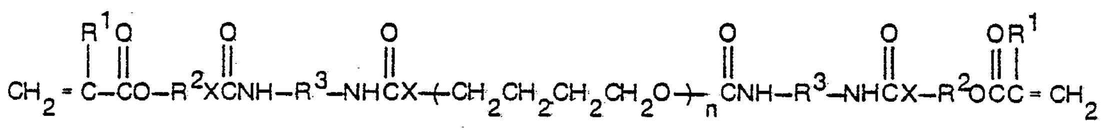

(II)

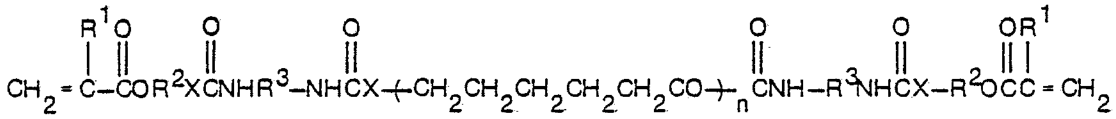

(III)

wherein:

$R^1$ is hydrogen or methyl;

$R^2$ is lower alkylene;

$R^3$ is aliphatic or cycloaliphatic;

X is —O— or —NH—;

n is an integer from 2 to 50 inclusive.

These oligomers are produced by reacting polytetrahydrofuran, polycaprolactone polyols and other polyols with a diisocyanate to produce an isocyanate terminated prepolymer. The isocyanate terminated prepolymer is then capped with a capping agent to produce the oligomer of Formula II and Formula III. The preferred oligomers of Formula II are those of Formula V and the preferred oligomers of Formula III are those of Formula VI:

(V) 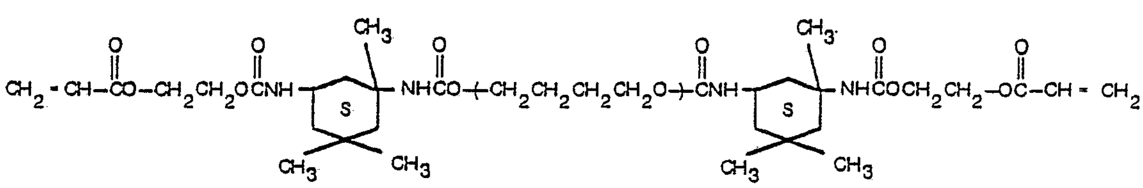

(VI) 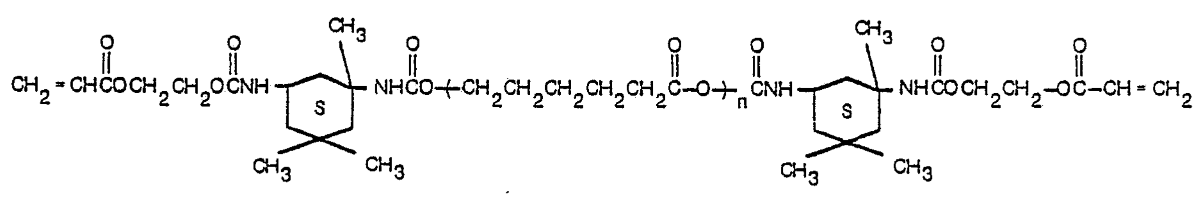

wherein

"n" is an integer from 5 to 20 inclusive.

The polytetrahydrofuran is commercially available from the Du Pont Company under the trademarks "TERRECOL—650"®, "TERRECOL—1000"®, and "TERRECOL—2000"®, and from the Quaker Oats Company under the tradenames "POLYMEG—650"®, "POLYMEG—1000"® and

"POLYMEG—2000"®. In the above named tradenames the number indicates the approximate molecular weight of the polytetrahydrofuran. The most preferred polytetrahydrofuran is that having a molecular weight of 650 which is consistent with the definition of "n" in Formulas II and V herein. At higher molecular weights wherein "n" exceeds about 50 the resultant oligomer has too high a viscosity.

The caprolactone polyols are commercially available from Union Carbide Corporation under the tradenames "NIAX CAPROLACTONE POLYOLS"® — PCP—0200, PCP—0210, PCP—0230, PCP—0240, PCP—0300, PCP—0301 and PCP—0310. The 0200 series are diols with molecular weights 530, 830, 1250 and 2000 respectively. The 0300 series are triols with molecular weights 540, 300 and 900 respectively.

The oligomers of Formula II, III, V and VI can be produced in accordance with U.S. Patent 4,129,709. The capping agents useful in the present invention are those that will react with the isocyanate terminated prepolymer to produce the oligomers of Formula II. In general, any capping agent having a terminal amine or hydroxyl group and also having an acrylic acid or methacrylic acid moiety is suitable. Examples of suitable capping agents include among others hydroxyethyl acrylate, hydroxyethyl methacrylate, hydroxypropyl acrylate, hydroxypropyl methacrylate, hydroxybutyl acrylate, hydroxybutyl methacrylate, hydroxypentyl acrylate, hydroxypentyl methacrylate, hydroxyhexyl acrylate, hydroxyhexyl methacrylate, aminoethyl acrylate, and aminoethyl methacrylate.

The diisocyanates useful to produce oligomers of Formula II are aliphatic and cycloaliphatic diisocyanates that will react with terminal hydroxyl groups present on the polytetrahydrofuran. Of course, aromatic diisocyanates undergo the same reaction but do not yield a product as satisfactory as that obtained by the use of aliphatic diisocyanates. Examples of suitable diisocyanates include among others, isophorone diisocyanate, 4,4'-dicyclohexylmethane-diisocyanate available commercially from the Du Pont Company under the tradename "Hylene W"®, and trimethyl-hexamethylene-diisocyanate, 1,6 hexamethylene diisocyanate, 2,4,4 triethyl 1,6 hexylene diisocyanate, octadecylene diisocyanate and 1,4 cyclohexylene diisocyanate. The preferred diisocyanates are isophorone diisocyanate (3-isocyanatomethyl 3,5,5 trimethyl cyclohexyl isocyanate) and 4,4' dicyclohexylmethane-diisocyanate.

The vinyl monomer copolymerizable with the oligomer may be one or more monomers compatible with the oligomer selected. N-vinyl-2-pyrrolidone and acrylic acid esters having a boiling point of at least 200°C at 1013 mbar (760 mm Hg) are preferred. These monomers allow adjustment of the viscosity for ease of coating operations and N-vinyl-2-pyrrolidones also enhance the rate of curing.

The weight ratio of oligomer to N-vinyl-2-pyrrolidone can vary widely as long as the properties of the resultant cured coating composition are not adversely affected, however, they are generally present in a weight ratio of 1:9 to 9:1 and preferably 1:3 and 3:1. At higher ratios, e.g., those rich in oligomer, the uncured coating composition tends to have too high a viscosity. This high viscosity makes it difficult to apply the uncured coating composition to the substrate. At lower ratios the resultant cured coating composition tends to be too hard and inflexible.

The acrylic acid ester should have a boiling point of at least 200°C at 1013 mbar (760 mm Hg). Acrylic acid esters of lower boiling points tend to vaporize during curing. Such vaporization causes undesirable changes in the coating composition. Furthermore, vaporized acrylic acid esters tend to polymerize on the radiation source, e.g., ultra-violet lamps or electron beam window. This vaporization also causes undesirable atmospheric pollution. The acrylic acid esters useful in the present invention include, among others, monoesters, diesters and higher esters of both acrylic acid and methacrylic acid. Examples of suitable acrylic acid esters include, among others, 1,4-butanedioldiacrylate, 1,6-hexanedioldiacrylate, neopentylglycoldiacrylate, pentaerythritol-tetramethacrylate, trimethylolpropanetriacrylate, ethylhexyl-acrylate, ethylhexyl-methacrylate, pentyl-acrylate, hexyl-acrylate and cyclohexyl-methacrylate. 1,4-butanedioldiacrylate and 1,6-hexanedioldiacrylate are the preferred acrylic acid esters.

The acrylic acid ester can be present in the coating composition in widely varying amounts but is generally present in a weight ratio of 1:9 to 9:1 and preferably 1:3 to 3:1 compared to the oligomer of Formula I or II.

The copolymerizable (2-cyano-3,3-diphenylacryloxy) alkylene acrylic acid ester ultra-violet light absorber is of the Formula IV.

(IV)

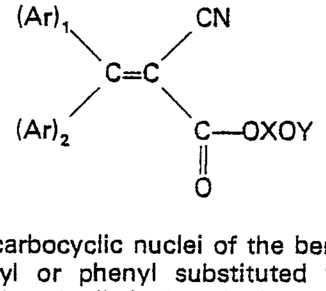

where $(Ar)_1$ and $(Ar)_2$ are aromatic carbocyclic nuclei of the benzene and naphthalene series and are independently selected from phenyl or phenyl substituted with alkyl, halogen, alkoxy, carboxy, carbalkoxy, cyano, acetyl, benzoyl, phenyl, alkyl, phenyl, phenoxy phenyl, alkyl substituted phenoxy, or alkoxy phenyl substituted phenyl and naphthyl;

X is alkylene, $C_2$—$C_{17}$, unsubstituted or substituted with halogen, cyano, alkyl, alkoxy $C_1$—$C_6$, alkoxyalkyl up to $C_6$ or alkoxyalkyleneoxy up to $C_6$; and;

Y is a copolymerizable radical selected from acryloyl, alkylacryloyl up to $C_{12}$, acryloxyhydroxyalkyl up to $C_{12}$, and alkylacryloxyhydroxyalkyl up to $C_{12}$, or —RCR′=CHR″ where R is alkylene $C_1$—$C_{10}$, oxyalkylene $C_1$—$C_{10}$, alkyleneoxyalkylene up to $C_{10}$ or phenyl, unsubstituted or substituted with hydroxy, and, R′ and R″ are independently hydrogen or alkyl $C_1$—$C_6$.

Suitable $(Ar)_1$ and $(Ar)_2$ groups are given in US—PS 3 644 466, including representative starting benzophenone compounds. In the best mode of the invention, both $(Ar)_1$ and $(Ar)_2$ are phenyl.

The X groups are unsubstituted or substituted alkylene radicals, $C_2$—$C_{17}$. The preferred groups are unsubstituted lower alkylene, $C_2$—$C_6$, which are derived synthetically from ethylene glycol, propylene glycol, butanediol and the like. Typical X groups are $—CH_2CH_2—$; $—CH_2CH_2CH_2—$; $—CH_2CH_2CH_2CH_2—$, and the like. The best mode is represented by $—CH_2—CH_2—$.

The Y radical is copolymerizable with vinyl monomers so that the ultraviolet absorber becomes an integral part of the polymer. Suitable Y groups are derived from acryloyl, alkylacryloyl, acryloxyalkyl, acryloxyhydroxyalkyl and alkylacryloxyhydroxyalkyl, which contain up to 12 carbon atoms. The preferred groups are acryloyl, methacryloyl, glycidyl acryloyl and glycidyl methacryloyl. Representative Y groups are

$—C(=O)—CH=CH_2$ (acryloyl), $—C(=O)—C(CH_3)=CH_2$ (methacryloyl), $—CH_2—CH(OH)CH_2OC(=O)CH=CH_2$

(3-acryloxy-2-hydroxypropyl), and $—CH_2CH(OH)CH_2OC(=O)C(CH_3)=CH_2$ (3-methacryloxy-2-hydroxypropyl).

The best mode is represented by acryloyl or methacryloyl.

The compounds of formula IV contain both ultraviolet light absorber and copolymerizable groups in the same molecule. These groups are effectively separated by the X radical so that each can perform its own function without interference from the other. Thereupon, the absorber portion does not inhibit the copolymerization, and the Y radical does not affect the light absorbing properties of the molecule.

The —RCR′=CHR″ radical is copolymerizable with vinyl monomers so that the ultraviolet absorber becomes an integral part of the polymer. Suitable radicals are allyl, crotyl, methylpropenyl, vinylbenzyl, vinyloxyether, allyloxy-2-hydroxypropyl and 2-hydroxy-3-butenyl. The best mode is represented allyl.

The absorber compounds may be prepared by esterification of 2-hydroxyalkyl(2-cyano-3,3-diphenyl) acrylate with an acryloyl halide or acrylic acid.

Preferably, in this synthesis, the hydroxy group of a hydroxyalkyl cyano acetate first is protected by acylation with a group convertible by hydrolysis to the hydroxy compound, e.g. with acetyl chloride, to provide the corresponding acetoxyalkyl cyanoacetate. The protected compound then is condensed with a benzophenone in a Knoevenagel reaction to provide the acetoxy(2-cyano-3,3-diphenyl) acrylate in good yield. Subsequent acid hydrolysis of the protecting acetyl group affords the corresponding hydroxy intermediate, which is then directly esterified with a suitable acryloyl halide or acrylic acid to give the desired compounds.

The absorber compounds may be prepared by alkylation of 2-hydroxyalkyl 2-cyano-3,3-diphenyl acrylate with an ethylenic halide.

Preferably, in this synthesis, the hydroxy group of a hydroxyalkyl cyano acetate first is protected by acylation with a group convertible by hydrolysis to the hydroxy compound, e.g. with acetyl chloride, to provide the corresponding acetoxyalkyl cyanoacetate. The protected compound then is condensed with a benzophenone in a Knoevenagel reaction to provide the acetoxyalkyl(2-cyano-3,3-diphenyl) acrylate in good yield. Subsequent acid hydrolysis of the protecting acetyl group affords the corresponding hydroxy intermediate, which is then directly esterified with a suitable acryloyl halide or acrylic acid to give the desired compounds.

The absorber compounds may be prepared by alkylation of 2-hydroxyalkyl 2-cyano-3,3- diphenyl acrylate with an ethylenic halide.

Preferably, in this synthesis, the hydroxy group of a hydroxyalkyl cyano acetate first is protected by acylation with a group convertible by hydrolysis to the hydroxy compound, e.g. with acetyl chloride, to provide the corresponding acetoxyalkyl cyanoacetate. The protected compound then is condensed with a benzophenone in a Knoevenagel reaction to provide the acetoxyalkyl(2-cyano-3,3-diphenyl) acrylate in good yield. Subsequent acid hydrolysis of the protecting acetyl group affords the corresponding hydroxy intermediate, which is then directly alkylated with a suitable ethylenic halide to give the desired compounds.

The amount of ultraviolet absorber of the above formula in the coating compositions for radiation curing suitably can vary from 0,5 to 5%; preferably from 0,75 to 2%, and optimally about 1,5% by weight of the composition. Lesser amounts do not give a coating that retains the light transmission or

low yellowness of the coating. Greater amounts retard the curing to an unacceptable level.

If the curing is done with ultraviolet light a photo-initiator is used. Suitable photo-initiators include vicinal ketaldonyl compounds (i.e., compounds containing a ketone group and an aldehyde group) such as diacetyl, benzil; 2,3-pentanedione, 2,3-octanedione, 1-phenyl-1,2-butanedione, 2,2-dimethyl-4-phenyl-3,4-butanedione, phenyl-glyoxal, diphenyl-triketone, aromatic diketones, such as anthraquinone; acryloins, such as benzoin; pivaloin acryloin ethers, such as benzoin-methyl-ether, benzoin-ethyl-ether, benzoin-butyl-ether, benzoin-isobutyl-ether, benzoin-phenyl-ether; alphahydrocarbon substituted aromatic acyloins, including alpha-methyl-methyl-benzoin, alpha-alkyl-benzoin as in US—PS 2 722 512 and phenylbenzoin; diaryl ketones, such as benzophenone and dinaphthyl ketone; and organic disulfides, such as diphenyldisulfide. The photo-initiator can also include a synergistic agent, such as a tertiary amine, to enhance the conversion of photo-absorbed energy to polymerization, initiating free radicals. Diethoxyacetophenone available from Union Carbide Corp., dimethoxyphenylacetophenone such as IRGACURE 651® available from Ciba-Geigy or a benzoin ether such as Vicure 10® available from Stauffer Chemical Company are preferred. The photoinitiator is present in the coating composition in an amount sufficient to initiate the desired polymerization under the influence of the amount of actinic light energy absorbed. The coating composition generally contains from 0,01 to 5 weight percent of photo- initiator based on the weight of the coating composition.

The coating composition can also contain an addition polymerization inhibitor to prevent undesirable auto-polymerization of the coating composition in storage prior to use. Examples of suitable addition polymerization' inhibitors include, among others, di(1,4 secbutylamino) benzene available from the DuPont Company under the tradename "Anti-Oxidant 22"® and phenothiazine available from Tefenco Chemical Co®. The addition polymerization inhibitor is present in an amount sufficient to prevent auto-polymerization and is generally present in an amount from 100—300 PPM based on the weight of the coating composition.

The coating composition can also contain a surfactant. The preferred surfactants are silicone surfactants such as that available from the Down Corning Corporation under the tradename "DC—193"®. The surfactant is present in an amount necessary to reduce the surface tension of the coating composition and reduce its viscosity to the desired level. The surfactant generally comprises from 0,1 to 5 weight percent based on the weight of the coating composition.

The coating compositions of the present invention can also contain other conventional additives, such as flow control and leveling agents, organic and inorganic dyestuffs and pigments, fillers, plasticizers, lubricants and reinforcing agents, such as alumina, silica, clay, talc, powdered glass, carbon black and fiberglass.

The coating compositions of the present invention can be cured by applying them as a film 12.7 μm (0.5 mil) thick on the substrate. Curing is preferably done under an inert atmosphere of nitrogen. The coating composition may be applied as a thin film in any conventional manner such as by spraying, brushing, dipping, roll coating and the like.

Conventionally, the film on the substrate is positioned to travel on a conveyor and pass under a source of a free radical generator, such as radiation. The coated side of the substrate is exposed to the radiation for a time sufficient to effect polymerization and convert the film into an adherent, tough, flexible coating.

As used herein the term radiation refers to any radiation source which will produce free radicals and induce addition polymerization of vinyl bonds. The actinic radiation is suitably in the wave length of 200—750 nm (2000—7500 A), preferably 200—400 nm (2000—4000 A). A class of actinic light useful herein is ultra-violet light and other forms of actinic radiation are from the sun, artificial sources such as Type RS sunlamps, carbon arc lamps. Xenon arc lamps, mercury vapor lamps, tungsten halide lamps, lasers, fluorescent lamps with ultra-violet light emitting phosphors.

Ultra-violet curing rates greater than 20 ft/min/lamp must be obtained in order to be commercially acceptable. With a reasonable thickness (less than 254 μm (10 mils) coating compositions with the ultra-violet absorber of Formula IV, present in an amount from 0.5 to 3% based on the weight of the composition, can be cured at rates of 25—50 0.3 m (ft)/min/lamp.

The preferred electron beam system contains a wide curtain of electrons directly from a linear cathode. A curtain of electrons from the gun's cathode, accelerated to a high velocity by a 200 KV potential, emerges from the chamber through a foil window into the coated substrates (Electroncurtain® by Energy Sciences, Inc.).

The electron beam curing of the coating compositions as described above is cured at, less than 5 Mrads and generally at 2 Mrads. Curing at greater than 8 Mrads is deemed unacceptable because of the high cost.

Laminates of film coatings based on acryl urethanes with an ultra-violet absorber of (2-cyano-3,3-diphenylacroyloxy) alkylene ethylenic ether applied on clear polyvinylchloride are surprisingly non-leachable and do not yellow.

The invention is further illustrated by the following examples in which all parts and percentages are by weight unless otherwise indicated. These non-limiting examples are illustrative of certain

embodiments designed to teach those skilled in the art how to practice the invention and to represent the best mode contemplated for carrying the invention.

Example 1

Preparation of Radiation Cured Coating

Into a dry 1 1. resin kettle fitted with an air inlet tube, a stirrer, thermometer, and dropping funnel was charged 300.8 g. (1.3 moles) of isophorone diisocyanate and 4.8 ml. of a 10% (W/V) solution of dibutyltin dilaurate catalyst in ethylhexylacrylate. Dry air then was bubbled through the stirred solution while 322.1 g. (0.61 moles) of polyolcaprolactone (PCP—200)® was added dropwise over 45 minutes. The solution then was heated to 80°C and the reactants maintained at this temperature for 30 minutes. After cooling to 55°C., 160 mg. of phenothiazine was admixed.

Then 151.9 g. (1.3 moles) of hydroxyethyl acrylate was added rapidly. The temperature was raised to 80°C. and maintained for 2 hours.

The resulting oligomer (58.1 g.) was formulated for coating by mixing with 25.4 g. of ethylhexylacrylate, 16.8 g. of vinyl pyrrolidone, 14.2 g. of hexanediol diacrylate, 1.8 g. of DC—193® silicone surfactant, 2.4 g. of Vicure-10® photoinitiator and 2.5 g. of 2-(2-cyano-3,3-diphenylacryloxy) ethyl acrylate. The resulting syrup was coated onto a polyvinyl chloride plate to form a film having a thickness of 38 $\mu$m (1.5 mil). The film then was cured by ultra-violet radiation under an inert atmosphere to provide a tough, clear coating containing the copolymerized UV absorber compound. The thus-protected polyvinyl chloride plate showed little tendency to yellowing even after 734 hours of testing in a Weather-Ometer.

Example 2

The resulting oligomer (58.1 g.) was formulated for coating by mixing with 25.4 g. of ethylhexylacrylate, 16.8 g. of vinyl pyrrolidone, 14.2 g. of hexanediol diacrylate, 1.8 g. of DC—193® silicone surfactant, 2.4 g. of Vicure-10® photoinitiator and 2.5 g. of 2-(2-cyano-3,3-diphenylacryloxy) ethyl allyl ether. The resulting syrup was coated onto a polyvinyl chloride plate to form a film having a thickness of 38 $\mu$m (1.5 mil). The film then was cured by ultraviolet radiation under an inert atmosphere to provide a tough, clear coating containing the copolymerized UV absorber compound of the invention. The protected polyvinyl chloride film showed less tendency to yellowing in a Weather-Ometer test than on unprotected film.

**Claims**

1. A radiation curable coating composition comprising:

(A) an oligomer of Formula I:

(I) 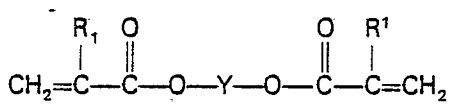

wherein:

$R^1$ is hydrogen or methyl; and

Y is a divalent urethane residue; and

(B) a copolymerizable ultraviolet light absorber compound of Formula IV:

(IV) 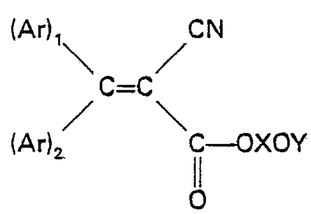

where:

$(Ar)_1$ and $(Ar)_2$ are independently selected from phenyl or phenyl substituted with alkyl, halogen, alkoxy, carboxy, carbalkoxy, cyano, acetyl, benzoyl, phenyl, alkyl phenyl, phenoxy phenyl, alkyl substituted phenoxy, or alkoxy phenyl substituted phenyl and naphthyl;

X is alkylene $C_2$—$C_{17}$, unsubstituted or substituted with halogen, cyano, alkyl $C_1$—$C_6$, alkoxy $C_1$—$C_6$, alkoxyalkyl up to $C_6$ or alkoxyalkyleneoxy up to $C_6$; and,

Y is a copolymerizable radical selected from acryloyl, alkylacryloyl up to $C_{12}$, acryloxyalkyl up to $C_{12}$, acryloxyhydroxyalkyl up to $C_{12}$, and alkylacryloxyhydroxyalkyl up to $C_{12}$, or —RCR'=CHR'', where R is alkylene $C_1$—$C_{10}$, oxyalkylene $C_1$—$C_{10}$, alkyleneoxyalkylene up to $C_{10}$, or phenylene, unsubstituted or substituted with hydroxy, and,

R' and R'' are independently hydrogen or alkyl $C_1$—$C_6$ and

(C) optionally a vinyl monomer copolymerizable with the oligomer.

2. The coating composition of claim 1 further comprising an addition polymerization inhibitor present in an amount sufficient to avoid the auto-polymerization of the composition during storage, preferably in an amount from 100 to 300 ppm based upon the weight of the composition.

3. The coating composition of claim 1 or 2, wherein the weight ratio of oligomer to vinyl monomer is from 1:9 to 9:1.

4. The coating composition of any of claims 1—3 further comprising a photo-initiator present in an amount sufficient to initiate the desired polymerization under the influence of the amount of actinic light energy absorbed.

5. The coating composition of any of claims 1—4, wherein the ultra-violet light absorber is present in an amount from 0.5 to 5 weight percent based on the weight of the composition.

6. The coating composition of any of claims 1—5 in which in Formula IV both $(Ar)_1$ and $(Ar)_2$ are phenyl.

7. The coating composition of any of claims 1—6 in which in Formula IV X is alkylene $C_2$—$C_6$.

8. The coating composition of any of claims 1—7 in which in Formula IV Y is acryloyl, methacryloyl, 3-acryloxy-2-hydroxypropyl, or 3-methacryloxy-2-hydroxypropyl.

9. The coating composition of any of claims 1—7 in which in Formula IV —RCR′=CHR″ is allyl, crotyl, methylpropenyl, vinylbenzyl, vinyloxyether, allyloxy-2-hydroxypropyl or 2-hydroxy-3-butenyl.

10. The coating composition of any of claims 1—5 in which formula IV is 2-(2-cyano-3,3-diphenylacryloxy)ethyl acrylate or methacrylate.

11. The coating composition of any of claims 1—5 in which formula IV is 3-(2-cyano-3,3-diphenylacryloxy) propyl or butyl acrylate.

12. The coating composition of any of claims 1—5 in which formula IV is 3-(2-cyano-3,3-diphenylacryloyloxy)-2-hydroxypropyl acrylate or methacrylate.

13. The coating composition of claim 1 which is photopolymerizable in the presence of ultra-violet light said coating composition consisting essentially of:

A. an oligomer of Formula II:

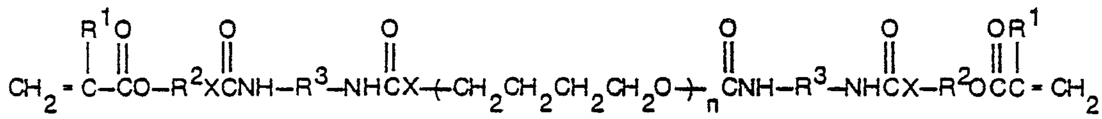

(II)

wherein:

$R^1$ is hydrogen or methyl;

$R^2$ is lower alkylene;

$R^3$ is aliphatic or cycloaliphatic;

X is —O— or —NH—;

n is an integer from 2 to 50 inclusive;

B. N-vinyl-2-pyrrolidone;

C. hexanediol diacrylate;

D. 2-(2-cyano-3,3-diphenylacryloxy) ethyl acrylate present in an amount from 0.5 to 5 weight percent based on the weight of the composition;

E. a photo-initiator present in an amount from 0.01 to 5 weight percent based on the weight of the composition;

F. an addition polymerization inhibitor present in an amount from 100—300 ppm based on the weight of the composition;

G. a silicone surfactant present in an amount from 0.1 to 5 percent based on the weight of the composition, wherein the ratio A:B is from 1:3 to 3:1 and wherein the ratio A:C is from 1:3 to 3:1.

14. A coating composition of Claim 1 which is photopolymerizable in the presence of ultra-violet light said coating composition consisting essentially of:

A. an oligomer of Formula III:

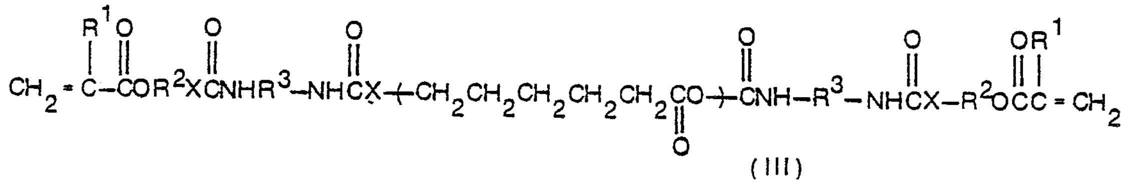

(III)

wherein:

$R^1$ is hydrogen or methyl;

$R^2$ is lower alkylene;

$R^3$ is aliphatic or cycloaliphatic;

X is —O— or —NH—;

n is an integer from 2 to 50 inclusive;

B. N-vinyl-2-pyrrolidone;

C. hexanediol diacrylate;

D. 2-(2-cyano-3,3-diphenylacryloxy) ethyl methacrylate present in an amount from 0.5 to 3 weight percent based on the weight of the composition.

E. a photo-initiator present in an amount from 0.01 to 5 weight percent based on the weight of the composition;

F. an addition polymerization inhibitor present in an amount from 100—300 ppm based on the weight of the composition;

G. a silicone surfactant present in an amount from 0.1 to 5 percent based on the weight of the composition, wherein the ratio A:B is from 1:3 to 3:1; and wherein the ratio A:C is from 1:3 to 3:1.

15. A process for coating a substrate comprising in sequence the steps of:

I. contacting the substrate with a coating composition according to any of claims 1—14 wherein the amount of B. is 0.5 to 5 weight percent, based on the weight of the composition; and,

II. exposing the coated substrate to actinic radiation until an adherent dry polymerized weather-resistant coating is formed on the substrate.

16. A laminate comprising a 2.54 to 254 $\mu$m planar sheet of clear polyvinyl chloride with a film coating (0.1 to 10 mils) in thickness comprising a cured coating composition of any of claims 1—14.

**Patentansprüche**

1. Durch Strahlung härtbare Überzugszusammensetzung, umfassend:

(A) ein Oligomer der Formel I;

(I) 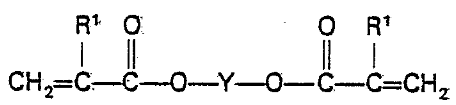

wobei:

$R^1$ Wasserstoff oder Methyl ist; und

Y ein zweiwertiger Urethanrest ist; und

(B) eine copolymerisierbare, Ultraviolettlicht absorbierende Verbindung der Formel IV:

(IV) 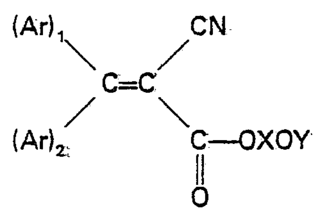

wobei:

$(Ar)_1$ und $(Ar)_2$ unabhängig ausgewählt sind unter Phenyl oder Phenyl, substituiert mit Alkyl, Halogen, Alkoxy, Carboxy, Carbalkoxy, Cyano, Acetyl, Benzoyl, Phenyl, Alkylphenyl, Phenoxyphenyl, alkyl-substituiertem Phenoxy oder alkoxyphenyl-substituiertem Phenyl und Naphthyl;

X $C_2$—$C_{17}$-Alkylen ist, das unsubstituiert oder substituiert mit Halogen, Cyano, $C_1$—$C_6$-Alkyl, $C_1$—$C_6$-Alkoxy, Alkoxyalkyl mit bis zu $C_6$ oder Alkoxyalkylenoxy mit bis zu $C_6$ ist; und

Y ein copolymerisierbarer Rest, ausgewählt unter Acryloyl, Alkylacryloyl mit bis zu $C_{12}$, Acyloxyalkyl mit bis zu $C_{12}$, Acryloxyhydroxyalkyl mit bis zu $C_{12}$ und Alkylacryloxyhydroxyalkyl mit bis zu $C_{12}$, oder —RCR'=CHR'' ist,

wobei R $C_1$—$C_{10}$-Alkylen, $C_1$—$C_{10}$-Oxyalkylen, Alkylenoxyalkylen mit bis zu $C_{10}$ oder Phenylen ist, das unsubstituiert oder mit Hydroxy substituiert ist, und

R' und R'' unabhängig Wasserstoff oder $C_1$—$C_6$-Alkyl sind, und

(C) gegebenenfalls ein mit dem Oligomer copolymerisierbares Vinylmonomer.

2. Überzugszusammensetzung nach Anspruch 1, die zusätzlich einen Additionspolymerisationsinhibitor in einer ausreichenden Menge umfaßt, um die Autopolymerisation der Zusammensetzung während der Lagerung zu verhindern, vorzugsweise in einer Menge von 100 bis 300 ppm, bezogen auf das Gewicht der Zusammensetzung.

3. Überzugszusammensetzung nach Anspruch 1 oder 2, worin das Gewichtsverhältnis von Oligomer zu Vinylmonomer 1:9 bis 9:1 beträgt.

4. Überzugszusammensetzung nach irgendeinem der Ansprüche 1 bis 3, die zusätzlich einen Photoinitiator in einer ausreichenden Menge umfaßt, um die gewünschte Polymerisation unter dem Einfluß der absorbierten aktinischen Lichtenergiemenge zu initiieren.

5. Überzugszusammensetzung nach irgendeinem der Ansprüche 1 bis 4, worin das Ultraviolettlicht-Absorptionsmittel in einer Menge von 0,5 bis 5 Gew.-%, bezogen auf das Gewicht der Zusammensetzung, vorhanden ist.

6. Überzugszusammensetzung nach irgendeinem der Ansprüche 1 bis 5, bei der in Formel IV sowohl $(Ar)_1$ als auch $(Ar)_2$ Phenyl sind.

7. Überzugszusammensetzung nach irgendeinem der Ansprüche 1 bis 6, bei der in Formel IV X $C_2$—$C_6$-Alkylen ist.

8. Überzugszusammensetzung nach irgendeinem der Ansprüche 1 bis 7, bei der in Formel IV Y Acryloyl, Methacryloyl, 3-Acryloxy-2-hydroxypropyl oder 3-Methacryloxy-2-hydroxypropyl ist.

9. Überzugszusammensetzung nach irgendeinem der Ansprüche 1 bis 7, bei der in Formel IV —RCR'=CHR'' Allyl, Crotyl, Methylpropenyl, Vinylbenzyl, Vinyloxyether, Allyloxy-2-hydroxypropyl oder 2-Hydroxy-3-butenyl ist.

10. Überzugszusammensetzung nach irgendeinem der Ansprüche 1 bis 5, bei der Formel IV 2-(2-Cyano-3,3-diphenylacryloxy)ethylacrylat oder-methacrylat ist.

11. Überzugszusammensetzung nach irgendeinem der Ansprüche 1 bis 5, bei der Formel IV 3-(2-Cyano-3,3-diphenylacryloxy)propyl- oder -butylacrylat ist.

12. Überzugszusammensetzung nach irgendeinem der Ansprüche 1 bis 5, bei der Formel IV 3-(2-Cyano-3,3-diphenylacryloyloxy)-2-hydroxypropylacrylat oder -methacrylat ist.

13. Überzugszusammensetzung nach Anspruch 1, die in Gegenwart von Ultraviolettlicht photopolymerisierbar ist und die im wesentlichen besteht aus:

A. einem Oligomer der Formel II:

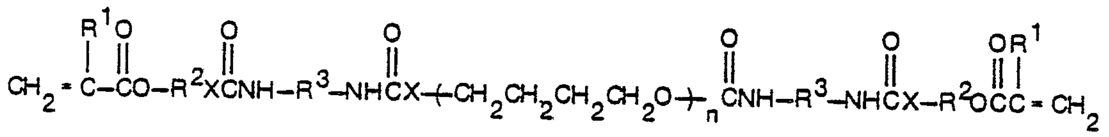

(II)

worin:

$R^1$ Wasserstoff oder Methyl ist;
$R^2$ Nieder-alkylen ist;
$R^3$ aliphatisch oder cycloaliphatisch ist;
X —O— oder —NH— ist;
n eine ganze Zahl von 2 bis 50 inklusive ist;

B. N-Vinyl-2-pyrrolidon;

C. Hexandioldiacrylat;

D. 2-(2-Cyano-3,3-diphenylacryloxy)ethylacrylat in einer Menge von 0,5 bis 5 Gew.-%, bezogen auf das Gewicht der Zusammensetzung;

E. einem Photoinitiator in einer Menge von 0,01 bis 5 Gew.-%, bezogen auf das Gewicht der Zusammensetzung;

F. einem Additionspolymerisationsinhibitor in einer Menge von 100 bis 300 ppm, bezogen auf das Gewicht der Zusammensetzung;

G. einem Silicon-Tensid in einer Menge von 0,1 bis 5 Prozent, bezogen auf das Gewicht der Zusammensetzung, wobei das Verhältnis A:B 1:3 bis 3:1 und das Verhältnis A:C 1:3 bis 3:1 beträgt.

14. Überzugszusammensetzung nach Anspruch 1, die in Gegenwart von Ultraviolettlicht photopolymerisierbar ist und im wesentlichen besteht aus:

A. einem Oligomer der Formel III:

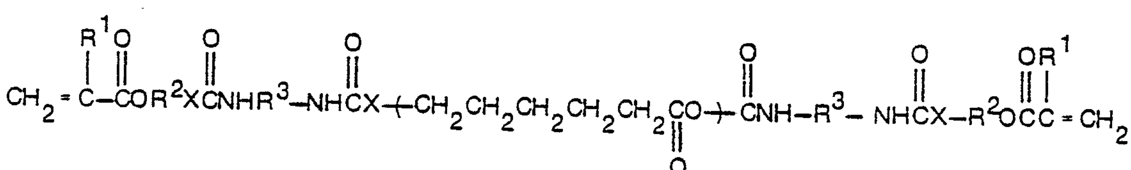

(III)

worin:

$R^1$ Wasserstoff oder Methyl ist;
$R^2$ Nieder-alkylen ist;
$R^3$ aliphatisch oder cycloaliphatisch ist;
X —O— oder —NH— ist;
n eine ganze Zahl von 2 bis 50 inklusive ist;

B. N-Vinyl-2-pyrrolidon;

C. Hexandioldiacrylat;

D. 2-(2-Cyano-3,3-diphenylacryloxy)ethylmethacrylat in einer Menge von 0,5 bis 3 Gew.-%, bezogen auf das Gewicht der Zusammensetzung;

E. einem Photoinitiator in einer Menge von 0,01 bis 5 Gew.-% bezogen auf das Gewicht der Zusammensetzung;

F. einem Additionspolymerisationsinhibitor in einer Menge von 100 bis 300 ppm, bezogen auf das Gewicht der Zusammensetzung;

G. einem Silicon-Tensid in einer Menge von 0,1 bis 5 Prozent, bezogen auf das Gewicht der Zusammensetzung, wobei das Verhältnis A:B 1:3 bis 3:1 und das Verhältnis A:C 1:3 bis 3:1 beträgt.

15. Verfahren zum überziehen eines Substrates, umfassend die Folge der Schritte:

I. Kontaktieren des Substrates mit einer Überzugszusammensetzung nach irgendeinem der Ansprüche 1 bis 14, wobei die Menge von B. 0,5 bis 5 Gew.-%, bezogen auf das Gewicht der Zusammensetzung beträgt, und

II. Aussetzen des überzogenen Substrates einer aktinischen Strahlung, bis auf dem Substrat ein haftender, trockener, polymerisierter, wetterbeständiger überzug entstanden ist.

16. Laminat, umfassend einen planare Folie aus klarem Polyvinylchlorid mit einem Filmüberzug von 2,54 bis 254 μm (0,1 bis 10 mil) Dicke, umfassend eine gehärtete Überzugszusammensetzung nach irgendeinem der Ansprüche 1 bis 14.

## Revendications

1. Composition de revêtement réticulable par radiations, comprenant

(A) un oligomère de formule I:

(I) 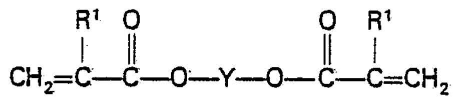

dans laquelle:

$R^1$ est l'hydrogène ou le groupe méthyle; et

Y est un résidu d'uréthanne divalent; et

(B) un composé copolymérisable absorbant la lumière ultraviolette, de formule IV:

(IV) 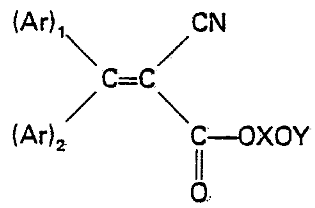

dans laquelle:

$(Ar)_1$ et $(Ar)_2$ sont choisis, indépendamment, entre le groupe phényle et un groupe phényle substitué avec un radical alkyle, halogéno, alkoxy, carboxy, carbalkoxy, cyano, acétyle, benzoyle, phényle, alkylphényle, phénoxyphényle, phénoxy à substituant alkyle ou phényle à substituant alkoxyphényle et naphtyle;

X est un groupe alkylène en $C_2$ à $C_{17}$, non substitué ou substitué avec un halogène ou un radical cyano, alkyle en $C_1$ à $C_6$, alkoxy en $C_1$ à $C_6$, alkoxyalkyle ayant jusqu'à 6 atomes de carbone ou alkoxyalkylèneoxy ayant jusqu'à 6 atomes de carbone; et

Y est un radical copolymérisable choisi entre un radical acryloyle, alkylacryloyle allant jusqu'à $C_{12}$, acryloxyalkyle allant jusqu'à $C_{12}$, acryloxyhydroxyalkyle allant jusqu'à $C_{12}$ et alkylacryloxyhydroxyalkyle allant jusqu'à $C_{12}$ ou un groupe —RCR'=CHR'', dans lequel R est un groupe alkylène en $C_1$ à $C_{10}$, oxyalkylène en $C_1$ à $C_{10}$, alkylèneoxyalkylène allant jusqu'à $C_{10}$, ou phénylène, non substitué ou substitué avec un groupe hydroxy, et

R' et R'' représentent, indépendamment, l'hydrogène ou un groupe alkyle en $C_1$ à $C_6$, et

(C) le cas échéant, un monomère vinylique copolymérisable avec l'oligomère.

2. Composition de revêtement suivant la revendication 1, comprenant en outre un inhibiteur de polymérisation par addition présent en une quantité suffisante pour éviter l'autopolymérisation de la composition pendant l'entreposage, de préférence en une quantité allant de 100 à 300 parties par million sur la base du poids de composition.

3. Composition de revêtement suivant la revendication 1 ou 2, dans laquelle le rapport en poids de l'oligomère au monomère vinylique va de 1:9 à 9:1.

4. Composition de revêtement suivant l'une quelconque des revendications 1 à 3, comprenant en outre un photo-initiateur présent en une quantité suffisante pour déclencher la polymérisation désirée sous l'influence de la quantité d'énergie lumineuse actinique absorbée.

5. Composition de revêtement suivant l'une quelconque des revendications 1 à 4, dans laquelle le composé absorbant la lumière ultraviolette est présent en une quantité de 0,5 à 5% en poids sur la base du poids de composition.

6. Composition de revêtement suivant l'une quelconque des revendications 1 à 5, dans laquelle $(Ar)_1$ et $(Ar)_2$ dans la formule IV sont tous deux un groupe phényle.

7. Composition de revêtement suivant l'une quelconque des revendications 1 à 6, dans laquelle X, dans la formule IV, est un groupe alkylène en $C_2$ à $C_6$.

8. Composition de revêtement suivant l'une quelconque des revendications 1 à 7, dans laquelle Y, dans la formule IV, est un groupe acryloyle, méthacryloyle, 3-acryloxy-2-hydroxypropyle ou 3-méthacryloxy-2-hydroxypropyle.

9. Composition de revêtement suivant l'une quelconque des revendications 1 à 7, dans laquelle —RCR'=CHR'' dans la formule IV, est un groupe allyle, crotyle, méthylpropényle, vinylbenzyle, vinyloxyéther, allyloxy-2-hydroxypropyle ou 2-hydroxy-3-butényle.

10. Composition de revêtement suivant l'une quelconque des revendications 1 à 5, dans laquelle la formule IV représente l'acrylate ou le méthacrylate de 2-(2-cyano-3,3-diphénylacryloxy)éthyle.

11. Composition de revêtement suivant l'une quelconque des revendications 1 à 5, dans laquelle la formule IV représente l'acrylate de 3-(2-cyano-3,3-diphénylacryloxy)propyle ou butyle.

12. Composition de revêtement suivant l'une quelconque des revendications 1 à 5, dans laquelle la formule IV représente l'acrylate ou le méthacrylate de 3-(2-cyano-3,3-diphénylacryloyloxy)-2-hydroxypropyle.

13. Composition de revêtement suivant la revendication 1, qui est photopolymérisable en présence de lumière ultraviolette, ladite composition de revêtement étant essentiellement formée:

A. d'un oligomère de formule II:

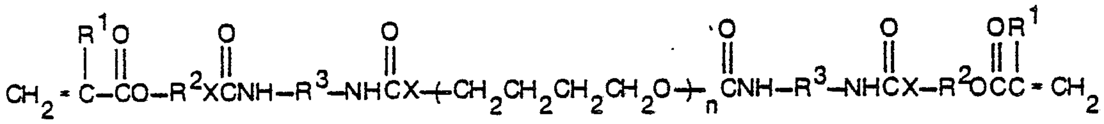

(II)

dans laquelle:

$R^1$ est l'hydrogène ou le groupe méthyle;

$R^2$ est un groupe alkylène inférieur;

$R^3$ est un groupe aliphatique ou cycloaliphatique;

X représente —O— ou —NH—;

*n* est un nombre entier de 2 à 50 inclus;

B. de N-vinyl-2-pyrrolidone;

C. de diacrylate d'hexanediol;

D. d'acrylate de 2-(2-cyano-3,3-diphénylacryloxy)éthyle présent en une quantité de 0,5 à 5% en poids sur la base du poids de composition;

E. d'un photo-initiateur présent en une quantité de 0,01 à 5% en poids sur la base du poids de composition;

F. d'un inhibiteur de polymérisation par addition présent en une quantité de 100 à 300 ppm sur la base du poids de composition;

G. d'un surfactant siliconé présent en une quantité de 0,1 à 5% en poids sur la base du poids de composition, le rapport A:B ayant une valeur de 1:3 à 3:1; et le rapport A:C ayant une valeur de 1:3 à 3:1.

14. Composition de revêtement suivant la revendication 1, qui est photopolymérisable en présence de lumière ultraviolette, ladite composition de revêtement étant essentiellement formée:

A. d'un oligomère de formule III:

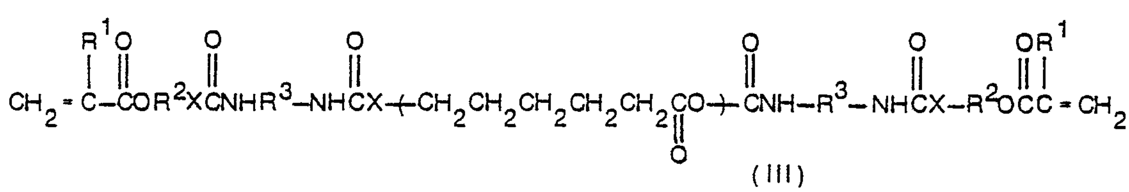

(III)

dans laquelle:

$R^1$ est l'hydrogène ou le groupe méthyle;

$R^2$ est un groupe alkylène inférieur;

$R^3$ est un groupe aliphatique ou cycloaliphatique;

X représente —O— ou —NH—;

*n* est un nombre entier de 2 à 50 inclus;

B. de N-vinyl-2-pyrrolidone;

C. de diacrylate d'hexanediol;

D. de méthacrylate de 2-(2-cyano-3,3-diphénylacryloxy)éthyle présent en une quantité de 0,5 à 3% en poids sur la base du poids de composition;

E. d'un photo-initiateur présent en une quantité de 0,01 à 5% en poids sur la base du poids de composition;

F. d'un inhibiteur de polymérisation par addition présent en une quantité de 100 à 300 ppm sur la base du poids de composition;

G. d'un surfactant siliconé présent en une quantité de 0,1 à 5% sur la base du poids de composition, le rapport A:B ayant une valeur de 1:3 à 3:1; et le rapport A:C ayant une valeur de 1:3 à 3:1.

15. Procédé de revêtement d'un substrat, comprenant les étapes successives de:

I. mise en contact du substrat avec une composition de revêtement suivant l'une quelconque des revendications 1 à 14 dans laquelle la quantité de B est de 0,5 à 5% en poids sur la base du poids de composition; et

II. exposition du substrat revêtu à des radiations actiniques jusqu'à ce qu'un revêtement adhérent polymérisé sec résistant aux facteurs atmosphériques soit fixé sur le substrat.

16. Stratifié comprenant une feuille plane de chlorure de polyvinyle portant un film de revêtement de 2,54 à 254 $\mu$m (0,1 à 10 millièmes de pouce) d'épaisseur formé d'une composition de revêtement réticulée suivant l'une quelconque des revendications 1 à 14.